# EUROPEAN PATENT APPLICATION

(11) **EP 2 023 529 A1**
(43) Date of publication of application: **11.02.2009**
(21) Application number: 06741797.2
(22) Date of filing: 08.05.2006
(51) Int. Cl.: H04L 9/32

(54) **A METHOD FOR PROTECTING DIGITAL CONTENT BY ENCRYPTING AND DECRYPTING A MEMORY CARD**

(71) Applicant: Lin, Hui, Taipei 114 (TW)
(72) Inventor: Lin, Hui, Taipei 114 (TW)
(74) Representative: Lang, Christian
(86) International application number: PCT/CN2006/000901
(87) International publication number: WO 2007/128162

(57) **Abstract**

A method for protecting digital contents by using memory card encryption and decryption comprises the steps of: a format of a memory card being formatted with a special format; digital contents being encrypted from a digital content maker and then the digital contents being stored to the encrypted memory card; or the digital contents being encrypted as downloaded from a network; therefore, the digital contents in the memory card being encrypted. The digital contents is encrypted and has the format of the encrypted memory card; and the network download end has a de-formatting and decrypting tool which can de-formatting and decrypting the digital contents so as to restore the digital contents. The digital contents can be stored in an SD memory card while the digital contents will not be duplicated or copied, or amended.

## Description

### FIELD OF THE INVENTION

The present invention relates to protection of digital contents, in particular to a method for protecting digital contents by using memory card encryption and decryption which serves to protect and manage of digital contents so as not to be copied or amended illegally.

### BACKGROUND OF THE INVENTION

Due to the progress of the computer science and digital technology, many contents of creations (such as movies or music, etc.) are converted into digital AV (audio / video compressing files). Then the files are recorded to the CDs or DVDs, etc. and other carriers for using. Other than movies and music, the contents of creation are widely used to operas, speeches, etc. The contents of these creations can be converted into digital AV (audio / video) compressing files (in the following, they are called as digital contents).

However, since the progress of compression and duplication, the contents of movies or music are easily to have desired file format which can be duplicated. With the use of networks, the media can be widely propagated. However the copyrights of these contents can not be well protected. New technologies can easily decode the digital contents so that the creators of these contents will feel sad to his (or her) creations and they have lower willing to create more works. Thus there is an eager demand for a novel design to develop a new technology which can effectively progress the encryption technology to protect the digital contents not to crack the contents so as to achieve the object of protection of copyright.

Furthermore, the carriers generally are CDs, DVDs, and other optical disks. Other than a few erasable disks which can be burned repeatedly, other disks are difficult to be reused. Furthermore, due to the large volumes of these disks, generally they are used for carrying the contents to another memory cards, such as SD cards.

Moreover, since the memory cards are mainly used to store digital contents (as a disk), however if they can be used with the safety property of a secured digital card (SD) and the feature of small volume. The memory card will provide the advantages of highly portable, and widely used safety devices. Other than the progresses of transmission speed and capacities, the current used SD cards are widely accepted . Thus the memory cards have the advantages of as preferred contents carriers. Currently, electronic books are published by SD memory cards. However to protect the digital contents not to be duplicated easily, even a corresponding certification software is used to decode the contents for playing. Furthermore, the contents can be managed and limited by the software, but the mechanism is inflexible so as to confine the use of the digital contents.

### SUMMARY OF THE INVENTION

Accordingly, the object of the present invention is to provide a method for protecting digital contents by using memory card encryption and decryption, wherein the memory card is used to encrypt digital contents so that only the user having the de-formatting and decrypting tool about the memory card can read the digital contents for being played. The method comprises the steps of: a format of a memory card being formatted with a special format, i, e, being encrypted; digital contents being encrypted from a digital content maker and then the digital contents being stored to the encrypted memory card; or the digital contents being encrypted as downloaded from a network and then being stored to the encrypted memory card; therefore, the digital contents in the memory card being encrypted and having a format of the encrypted memory card;

The network download end reads the digital contents. The digital contents is encrypted and has the format of the encrypted memory card; and the network download end has a de-formatting and decrypting tool which can de-formatting and decrypting the digital contents so as to restore the digital contents to an original form for being played and thus the digital contents can be stored in an SD memory card while the digital contents will not be duplicated or copied, or amended. Thus, the present invention provides a firmly secured data protection method.

In the method for protecting digital contents by using memory card encryption and decryption according to the present invention, the digital contents are selected from audio and video contents.

In the method for protecting digital contents by using memory card encryption and decryption according to the present invention, the memory card is selected from be one of SD cards, MMC cards, CF cards, MS cards, SM cards, and XD cards.

In the method for protecting digital contents by using memory card encryption and decryption according to the present invention, the digital contents are compressed and has a form of a file and thus the memory card has a large capacity for storing more digital contents.

In the method for protecting digital contents by using memory card encryption and decryption according to the present invention, the digital contents are encrypted by watermark encryption and are decrypted by watermark decryption, or the digital contents are encrypted by digital content ID sellers and are decrypted by digital content ID sellers, or the digital contents are encrypted by electronic envelops and are decrypted by electronic envelops.

In the present invention, the SD memory card serves to replace the CD and DVD, and other digital content carriers. Furthermore, the present invention has the function of preventing data transfer and illegal recording so that the copyrights of the creators are well protected.

Furthermore, meaning of protection in the present invention is to prevent the un-authorized person can not copy, capturing and amend the digital contents so as to protect the correction of the digital contents and protect the rights of creators,

The various objects and advantages of the present invention will be more readily understood from the following detailed description when read in conjunction with the appended drawing.

### BRIEF DESCRIPTION OF THE DRAWINGS

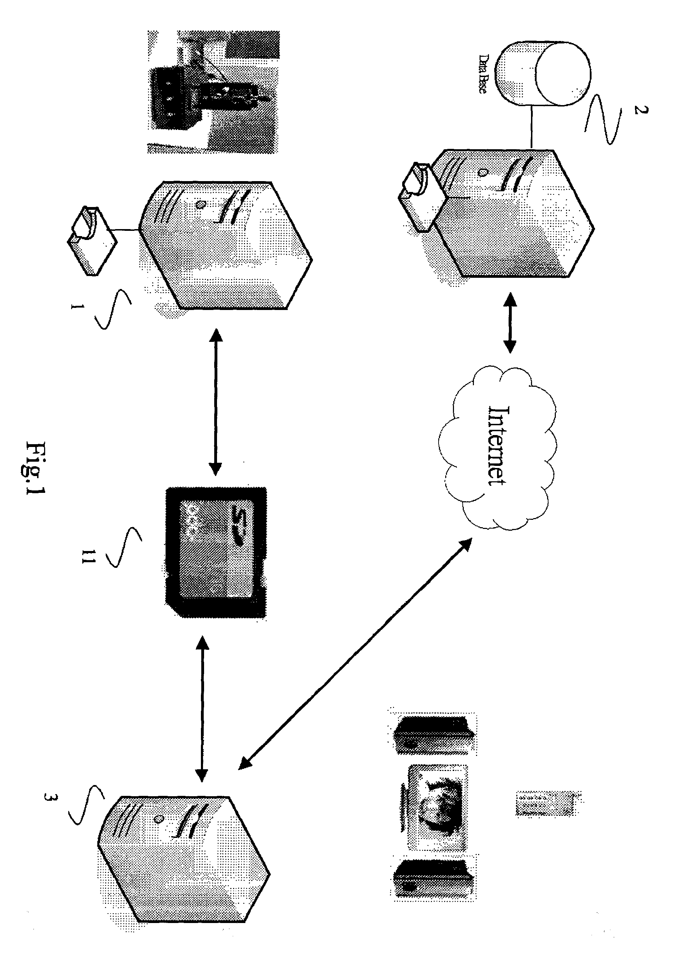

Fig. 1 is a schematic view showing the structure of the present invention.

### DETAILED DESCRIPTION OF THE INVENTION

In order that those skilled in the art can further understand the present invention, a description will be provided in the following in details. However, these descriptions and the appended drawings are only used to cause those skilled in the art to understand the objects, features, and characteristics of the present invention, but not to be used to confine the scope and spirit of the present invention defined in the appended claims.

### A: digital content maker 1:

The data format of a memory card 11 is formatted by using a special format so that the data stored in the memory card 11 is stored with the special format. The digital content maker 1 could make digital contents which are encrypted and then passed to the encrypted memory card 11. The digital content maker 1 includes image contents, music contents, or other contents with different formats (including compressed data formats). The memory card 11 may be one of SD cards, MMC cards, CF cards, MS cards, SM cards, and XD cards so that the present invention can be used in many different fields. Herein, SD cards are use in description, however, it is also suitable for MMC cards, CF cards, MS cards, SM cards, and XD cards, or other cards similar to above-mentioned cards. The encryption is digital watermark encryption or content seller ID encryption or others which are matched to the contents. The digital watermark encryption is to add some data to multi-media data. If necessary, the contents are taken out by specific methods for declaration of copyright of the contents. The means of the digital watermark encryption is digital / content signature to make difference from the original data for copyright management and for identification. Furthermore, they can be detected and the watermark can be decoded for copyright control. The watermark serves to proof the copyright of the owner. Only the copyright owner can decode the watermark.

In the present invention, the digital contents can be downloaded from a network to the encryption memory card 11. Thus similarly, the memory card 11 will have the digital contents.

### B: Network download end 2:

The network download end 2 download the digital contents through network. The digital contents are encrypted originally. The digital contents is encrypted and has the format of the encrypted memory card; and the network download end may has a de-formatting and decrypting tool which can de-formatting and decrypting the digital contents so as to restore the digital contents to an original form for being played. The de-formatting and decrypting tool is corresponding to that of the digital contents and can be original stored in the network download end 2 or the network download end 2 can download from a network to have the de-formatting and decrypting tool so that the digital contents can be stored in an SD memory card while the digital contents will not be duplicated or copied, or amended. Thus, the present invention provides a firmly secured data protection method.

By above-mentioned method, the present invention can be widely used to different audio and video contents to be stored in a SD memory card 11 so as to assure that the contents are not destroyed or duplicated or amended easily. Thus the present invention provides a digital protect mechanism to protect the copyright. Further, the present invention provides the function of using an SD card to replaced the current CD and DVD and other digital content file carrier, while it provides the function of preventing the file transfer and illegal recording so that the creator can manage the digital contents.

Moreover, the digital content provider compresses different audio or video compression by using the content encryption, watermark encryption, or digital content sell ID encryption and various audio or video compression system so as to avoid that the digital contents are recorded illegally or thieved by hackers so as to be dispersed. The encryption contents are provided to SD music / SD movies sellers. The digital content maker 1 can encrypt the digital contents of SD music / SD movies by electronic mails and DRM mechanism. Then the SD music / SD movies can be sold to the customers. Or for selling by using SMOD Web Server through networks, the customer 3 can connect to a network and then to a SMOD Web Server so as to have the decrypting and de-formatting tool which is firstly placed in a database. When the customer 3 desired to download the SD music / SD movies, the customer is connected to the SMOD Web Server. The SMOD Web Server will identify the customer by the SD ID (the SD ID of the SD, which may be placed in the partition Table as the SD card is partitioned) for identifying the legality of the customer. Then if the customer is a legal customer, he (or she) can download the SD music / SD movies. After connecting to the SMOD Web Server, the server has the functions of management, storage and accounting about the SD music / SD movies.

Another, when the customer has the SD music / SD movies, it can be placed by using a player. The player has the DRM mechanism. That is, a digital right management which is a control method for information. After payment of fees, the protection mechanism can be promoted so that the digital contents can not be copied illegally. Furthermore, the customer can not disperse the digital contents as desired. Furthermore, the number and time period of playing are controlled.

The present invention is thus described, it will be obvious that the same may be varied in many ways. Such variations are not to be regarded as a departure from the spirit and scope of the present invention, and all such modifications as would be obvious to one skilled in the art are intended to be included within the scope of the following claims.

## Claims

1. A method for protecting digital contents by using memory card encryption and decryption, comprising the steps of :
A: formatting a format of a memory card with a special format, i, e, being encrypted; digital contents being encrypted from a digital content maker; the encryption of the digital contents being independent from the encryption of the format of the memory card; and then the digital contents being stored to the encrypted memory card; or the digital contents being encrypted as downloaded from a network and then being stored to the encrypted memory card; therefore, the digital contents in the memory card being encrypted originally and having a format of the encrypted memory card; and
B: reading the digital contents; the digital contents being encrypted and having the format of the encrypted memory card; and the digital contents being de-formatting and decrypting so as to restore the digital contents to an original form for being played.

2. The method for protecting digital contents by using memory card encryption and decryption as claimed in claim 1, wherein the digital contents are selected from audio and video contents.

3. The method for protecting digital contents by using memory card encryption and decryption as claimed in claim 1, wherein the memory card is selected from be one of SD cards, MMC cards, CF cards, MS cards, SM cards, and XD cards.

4. The method for protecting digital contents by using memory card encryption and decryption as claimed in claim 1, wherein the digital contents are compressed and has a form of a file.

5. The method for protecting digital contents by using memory card encryption and decryption as claimed in claim 1, wherein the digital contents are encrypted by watermark encryption and are decrypted by watermark decryption.

6. The method for protecting digital contents by using memory card encryption and decryption as claimed in claim 1, wherein the digital contents are encrypted by digital content ID sellers and are decrypted by digital content ID sellers.

7. The method for protecting digital contents by using memory card encryption and decryption as claimed in claim 1, wherein the digital contents are encrypted by electronic envelops and are decrypted by electronic envelops.
